# EUROPÄISCHE PATENTSCHRIFT

(11) **EP 3 245 109 B1**
(45) Veröffentlichungstag und Bekanntmachung des Hinweises auf die Patenterteilung: **27.02.2019**
(21) Anmeldenummer: 15823501.0
(22) Anmeldetag: 17.12.2015
(51) Int. Cl.: B60T 11/21

(54) **BREMSANLAGE FÜR EIN FAHRZEUG SOWIE VERFAHREN ZUM BETREIBEN EINER BREMSANLAGE FÜR EIN FAHRZEUG**
BRAKE SYSTEM FOR VEHICLE AND METHOD FOR ITS ACTUATION
SYSTÈME DE FREINAGE POUR VEHICULE ET MÉTHODE D'ACTUATION DU SYSTÈME

(30) Priorität: 16.01.2015 DE 102015000594
(43) Veröffentlichungstag der Anmeldung: 22.11.2017
(73) Patentinhaber: KNORR-BREMSE Systeme für Nutzfahrzeuge GmbH, 80809 München (DE)
(72) Erfinder: FINKL, Florian, 80807 München (DE); BUCH, Andreas, 82024 Taufkirchen (DE); HERGES, Michael, 80935 München (DE)
(86) Internationale Anmeldenummer: PCT/EP2015/080129
(87) Internationale Veröffentlichungsnummer: WO 2016/113067

(56) Entgegenhaltungen:
- WO-A2-2010/094481
- US-A- 4 402 478
- US-A1- 2004 239 173
- US-A1- 2011 049 970

## Beschreibung

Die vorliegende Erfindung bezieht sich auf eine Bremsanlage für ein Fahrzeug sowie ein Verfahren zum Betreiben einer Bremsanlage für ein Fahrzeug.

Insbesondere landwirtschaftliche Fahrzeuge können eine mechanisch betätigbare Lenkbremsfunktion aufweisen. Die Lenkbremsfunktion kann beispielsweise durch ein zweikreisiges, parallel betätigbares Bremssteuerventil (das beispielsweise als Fußbremsventil ausgebildet ist) mit einer Bremskreistrennung in einen linken und einen rechten Bremskreis relativ zur Fahrzeuglängsachse und zwei Fußbremspedalen realisiert sein. Alternativ können zwei separate mechanische Steuereinrichtungen zur Druckbeaufschlagung eines linken bzw. rechten Hinterrads vorgesehen sein.

Ferner sind Lösungen zur Realisierung einer Lenkbremsfunktion bekannt, bei denen ein oder mehrere elektrische Drucksteuerventile oder Absperrventile durch ein oder mehrere elektronische Steuergeräte in Abhängigkeit von verschiedenen Eingangsinformationen angesteuert werden.

Die Druckschrift US 4,402, 478 offenbart ein Verfahren und eine Vorrichtung zum Bremsen eines breitspurigen Fahrzeugs, welches auf dem Boden zu einer Startbahn rollt.

Die Druckschrift US 2004/0239173 A1 offenbart eine redundante Architektur für ein System zum Bremsen mittles einer elektronischen Steuerung.

Es ist die Aufgabe der vorliegenden Erfindung, eine verbesserte Lenkbremsfunktion für ein Fahrzeug zu schaffen.

Diese Aufgabe wird durch eine Bremsanlage für ein Fahrzeug sowie ein Verfahren zum Betreiben einer Bremsanlage für ein Fahrzeug gemäß den unabhängigen Ansprüchen gelöst. Vorteilhafte Ausgestaltungen ergeben sich aus den jeweiligen Unteransprüchen und der nachfolgenden Beschreibung.

Der hier vorgeschlagene Ansatz schafft eine Bremsanlage für ein Fahrzeug, wobei die Bremsanlage folgende Merkmale aufweist:
eine pneumatisch und/oder hydraulisch betätigbare erste Bremseinrichtung zum Bremsen eines ersten Rads des Fahrzeugs;
eine pneumatisch und/oder hydraulisch betätigbare zweite Bremseinrichtung zum Bremsen eines zweiten Rads des Fahrzeugs;
ein dem ersten Rad zugeordnetes erstes Bremspedal;
ein dem zweiten Rad zugeordnetes zweites Bremspedal;
ein Bremssteuerventil, das ausgebildet ist, um die erste Bremseinrichtung und/oder die zweite Bremseinrichtung beim Betätigen des ersten Bremspedals und/oder des zweiten Bremspedals mit einem pneumatischen und/oder hydraulischen Bremsdruck zu beaufschlagen;
ein erstes Steuerventil zum Steuern eines Bremsdrucks in der ersten Bremseinrichtung;
ein zweites Steuerventil zum Steuern eines Bremsdrucks in der zweiten Bremseinrichtung; und
ein durch das erste Bremspedal und/oder das zweite Bremspedal betätigbares elektromechanisches Schaltmodul, das ausgebildet ist, um beim Betätigen des ersten Bremspedals das zweite Steuerventil zu aktivieren, um eine Bremswirkung der zweiten Bremseinrichtung aufzuheben oder zumindest zu verringern, und/oder beim Betätigen des zweiten Bremspedals das erste Steuerventil aktivieren, um eine Bremswirkung der ersten Bremseinrichtung aufzuheben oder zumindest zu verringern.

Die beiden Bremseinrichtungen können beispielsweise als Scheiben- oder Trommelbremse ausgebildet sein. Unter einem Fahrzeug kann ein Kraftfahrzeug, insbesondere ein Nutzfahrzeug wie etwa ein landwirtschaftliches Fahrzeug, verstanden werden. Die Bremseinrichtungen können beispielsweise Teil einer Hinterradbremse des Fahrzeugs sein. Das erste Rad und das zweite Rad können auf unterschiedlichen Fahrzeugseiten angeordnet sein. Beispielsweise können die beiden Räder durch ein Differenzialgetriebe miteinander gekoppelt sein. Unter einem Bremssteuerventil kann ein (beispielsweise durch die beiden Bremspedale) betätigbares Ventil verstanden werden, das ausgebildet ist, um in Abhängigkeit von einem jeweiligen Betätigungsweg der Bremspedale entweder einen pneumatischen oder einen hydraulischen Bremsdruck oder sowohl einen pneumatischen als auch einen hydraulischen Bremsdruck in zumindest einer der beiden Bremseinrichtungen zu erzeugen. Je nach Ausführungsform können die Bremseinrichtungen über einen oder mehrere Bremskreise mit dem Bremssteuerventil gekoppelt sein. Die Bremspedale können bei aktivierter Lenkbremsfunktion unabhängig voneinander betätigbar sein. Bei nicht deaktivierter Lenkbremsfunktion können die Bremspedale mechanisch miteinander gekoppelt sein. Die beiden Bremseinrichtungen können jeweils über zumindest ein Steuerventil mit dem Bremssteuerventil verbunden sein. Ein Steuerventil kann etwa ein Drucksteuer- oder Absperrventil sein, das im aktivierten Zustand eine Beaufschlagung der jeweiligen Bremseinrichtung mit dem Bremsdruck verhindert, sodass die Bremseinrichtung trotz gedrücktem Bremspedal nicht aktiviert wird oder ihre Bremskraft zumindest verringert wird. Die beiden Steuerventile können elektrisch ansteuerbar sein und je mit dem elektromechanischen Schaltmodul verbunden sein. Das elektromechanische Schaltmodul kann beispielsweise eine logische Schaltung mit zwei mechanisch betätigbaren Schaltern sein, die jeweils mit einem der beiden Bremspedale mechanisch gekoppelt sein können. Das elektromechanische Schaltmodul kann beispielsweise beim Aktivieren der Lenkbremsfunktion mit einer Spannungsquelle verbunden werden, sodass beim Betätigen des ersten Schalters durch das erste Bremspedal eine Spannung an dem zweiten Steuerventil anliegt oder beim Betätigen des zweiten Schalters durch das zweite Bremspedal die Spannung an dem ersten Steuerventil anliegt.

Der hier vorgestellte Ansatz beruht auf der Erkenntnis, dass es möglich ist, eine Lenkbremsfunktion eines Fahrzeugs unter Verwendung eines mit zwei Bremspedalen gekoppelten elektromechanischen Schaltmoduls zu realisieren.

Dadurch kann eine Lenkbremsfunktion auch bei einer Bremskreistrennung zwischen Vorder- und Hinterachse oder bei in Serie angeordneten oder betätigbaren Bremskreisen realisiert werden, ohne dass ein elektrisches Steuergerät zur logischen Steuerung der Lenkbremsfunktion erforderlich ist.

Beispielsweise kann das Schaltmodul derart ausgebildet sein, dass beim Betätigen eines einzelnen Bremspedals durch ein entsprechendes Absperren bzw. Entlüften einer Bremsleitung zu einer linken bzw. rechten Hinterradbremse und gegebenenfalls einer Bremsleitung zu einer Vorderradbremse lediglich das gegenüberliegende Rad eingebremst wird. Somit kann beispielsweise der Wenderadius des Fahrzeugs reduziert oder eine Richtungskorrektur durchgeführt werden, etwa bei Feldarbeiten.

Bei einem Fahrzeug mit zwei Bremspedalen zur Betätigung eines einkreisigen Bremssteuerventils oder eines zweikreisigen Bremssteuerventils mit seriellen Bremskreisen werden in der Regel alle Radbremsen mit Druck beaufschlagt, und zwar unabhängig davon, welches Bremspedal vom Fahrer betätigt wird.

Die Lenkbremsfunktion kann auch beim Gebrauch einkreisiger Bremssteuerventile bzw. zweikreisiger, seriell angeordneter Bremssteuerventile ohne die Verwendung eines Steuergeräts realisiert werden, indem die jeweiligen Drucksteuerventile der Radbremsen über eine einfache logische elektrische Schaltung mit den Bremspedalen gekoppelt werden. Eine solche Schaltung bietet den Vorteil geringer Herstellungskosten und einer hohen Robustheit gegenüber Umwelteinflüssen.

Gemäß einer Ausführungsform kann die Bremsanlage zumindest einen ersten Bremskreis und einen zweiten Bremskreis aufweisen. Das Bremssteuerventil kann ausgebildet sein, um die erste Bremseinrichtung entweder über den ersten oder den zweiten Bremskreis oder über beide Bremskreise mit dem Bremsdruck zu beaufschlagen. Das Bremssteuerventil kann ausgebildet sein, um ferner die zweite Bremseinrichtung entweder über den ersten oder den zweiten Bremskreis oder über beide Bremskreise mit dem Bremsdruck zu beaufschlagen. Insbesondere können der erste und der zweite Bremskreis in Reihe geschaltet sein. Unter einem Bremskreis kann ein Leitungskreis zum Leiten des Bremsdrucks in zumindest eine der beiden Bremseinrichtungen verstanden werden. Die Bremskreise können voneinander unabhängig sein. Durch die Verwendung zweier Bremskreise kann die Wahrscheinlichkeit eines Totalausfalls der Bremsanlage verringert werden.

Es ist vorteilhaft, wenn die Bremsanlage zumindest eine pneumatisch und/oder hydraulisch betätigbare weitere Bremseinrichtung zum Bremsen zumindest eines weiteren Rads des Fahrzeugs und zumindest ein weiteres Steuerventil zum Steuern eines Bremsdrucks in der weiteren Bremseinrichtung aufweist. Dabei kann das Bremssteuerventil ausgebildet sein, um ferner die weitere Bremseinrichtung beim Betätigen zumindest eines der beiden Bremspedale mit dem Bremsdruck zu beaufschlagen. Entsprechend kann das Schaltmodul ausgebildet sein, um beim Betätigen zumindest eines der beiden Bremspedale ferner das weitere Steuerventil zu aktivieren, um eine Bremswirkung der weiteren Bremseinrichtung aufzuheben oder zumindest zu verringern. Bei der weiteren Bremseinrichtung kann es sich beispielsweise um eine Vorderradbremse des Fahrzeugs handeln. Dadurch lässt sich die Lenkbremsfunktion mit geringem Zusatzaufwand auch bei Verwendung von mehr als zwei Bremseinrichtungen realisieren.

Gemäß einer weiteren Ausführungsform kann das Bremssteuerventil ausgebildet sein, um die erste Bremseinrichtung über den ersten Bremskreis mit dem Bremsdruck zu beaufschlagen. Zusätzlich oder alternativ kann das Bremssteuerventil ausgebildet sein, um die zweite Bremseinrichtung über den zweiten Bremskreis mit dem Bremsdruck zu beaufschlagen. Dadurch können die erste und die zweite Bremseinrichtung unabhängig voneinander mit dem Bremsdruck beaufschlagt werden, sodass bei einem Ausfall der einen Bremseinrichtung die andere Bremseinrichtung weiterhin funktionsfähig ist. Beispielsweise kann durch diese Ausführungsform eine Kreistrennung zwischen linker und rechter Fahrzeugseite realisiert werden.

Es ist ferner von Vorteil, wenn das Schaltmodul einen mit dem ersten Steuerventil elektrisch leitend verbundenen ersten Steueranschluss, einen mit dem zweiten Steuerventil elektrisch leitend verbundenen zweiten Steueranschluss, einen Versorgungsanschluss zum Anlegen einer Versorgungsspannung, einen mit dem ersten Bremspedal mechanisch gekoppelten ersten Schalter und einen mit dem zweiten Bremspedal mechanisch gekoppelten zweiten Schalter aufweist. Dabei kann der erste Schalter ausgebildet sein, um beim Betätigen des ersten Bremspedals den zweiten Steueranschluss mit dem Versorgungsanschluss elektrisch leitend zu verbinden, um das zweite Steuerventil zu aktivieren. Analog dazu kann der zweite Schalter ausgebildet sein, um beim Betätigen des zweiten Bremspedals den ersten Steueranschluss mit dem Versorgungsanschluss elektrisch leitend zu verbinden, um das erste Steuerventil zu aktivieren. Zum Anlegen der Versorgungsspannung kann der Versorgungsanschluss mit der Spannungsquelle koppelbar sein. Ein solches Schaltmodul kann besonders kostengünstig bereitgestellt werden und bietet aufgrund seiner einfachen mechanischen Ausführung den Vorteil einer hohen Zuverlässigkeit. Dadurch, dass die Ansteuerung der Schalter auf rein mechanischem Weg erfolgt, kann auf die Verwendung eines Steuergeräts verzichtet werden, womit die Herstellungskosten der Bremsanlage reduziert werden können.

Das Schaltmodul kann zumindest einen weiteren Steueranschluss aufweisen, der mit dem weiteren Steuerventil und, zusätzlich oder alternativ, mit einem Anhängersteuerventil zum Steuern eines Bremsdrucks in einer pneumatisch und/oder hydraulisch betätigbaren Anhängerbremseinrichtung zum Bremsen eines Anhängers des Fahrzeugs elektrisch leitend verbunden ist. Hierbei kann der erste Schalter ausgebildet sein, um den weiteren Steueranschluss beim Betätigen des ersten Bremspedals mit dem Versorgungsanschluss elektrisch leitend zu verbinden. Der zweite Schalter kann ausgebildet sein, um den weiteren Steueranschluss beim Betätigen des zweiten Bremspedals mit dem Versorgungsanschluss elektrisch leitend zu verbinden. Je nach Ausführungsform kann beim Verbinden des Versorgungsanschlusses mit dem weiteren Steueranschluss entweder das weitere Steuerventil oder das Anhängersteuerventil oder sowohl das weitere Steuerventil als auch das Anhängersteuerventil aktiviert werden, um eine Bremswirkung der weiteren Bremseinrichtung bzw. der Anhängerbremseinrichtung aufzuheben oder zumindest zu verringern. Dadurch lässt sich das Schaltmodul mit geringem Zusatzaufwand zur Ansteuerung einer Mehrzahl von Steuerventilen verwenden.

Die Bremsanlage kann mit zumindest einem zwischen dem weiteren Steueranschluss und dem Anhängersteuerventil angeordneten Anhängerschalter zum Steuern einer Spannungsversorgung des Anhängersteuerventils vorgesehen sein. Der Anhängerschalter kann beispielsweise ein Relais oder ein sonstiger elektromechanischer Schalter sein. Beispielsweise kann der Anhängerschalter von einem Fahrer des Fahrzeugs betätigbar sein. Mittels des Anhängerschalters kann unabhängig von einer Stellung des ersten und des zweiten Schalters eine Spannungsversorgung des Anhängersteuerventils unterbrochen werden. Dadurch kann sichergestellt werden, dass der Anhänger auch bei aktivierter Lenkbremsfunktion eingebremst wird.

Das Schaltmodul kann in einer besonders einfachen, zuverlässigen und kostengünstigen Variante realisiert werden, wenn zwischen dem ersten Steueranschluss und dem weiteren Steueranschluss eine erste Diode mit Durchlassrichtung vom ersten Steueranschluss zum weiteren Steueranschluss und zwischen dem zweiten Steueranschluss und dem weiteren Steueranschluss eine zweite Diode mit Durchlassrichtung vom zweiten Steueranschluss zum weiteren Steueranschluss angeordnet ist. Dabei können der erste Steueranschluss, der zweite Steueranschluss und der weitere Steueranschluss in Reihe geschaltet sein. Mittels der Dioden kann verhindert werden, dass die Versorgungsspannung an dem ersten und dem zweiten Steueranschluss gleichzeitig anliegt und somit das erste und das zweite Steuerventil gleichzeitig aktiviert werden, d. h., mittels der Dioden ist gewährleistet, dass die Versorgungsspannung entweder nur am ersten und am weiteren Steueranschluss oder nur am zweiten und am weiteren Steueranschluss anliegt.

Ferner können der erste und der zweite Schalter in Reihe geschaltet sein. Der zweite Schalter kann ausgebildet sein, um in einer Ruheposition des zweiten Bremspedals den zweiten Steueranschluss mit dem ersten Schalter elektrisch leitend zu verbinden. Der erste Schalter kann ausgebildet sein, um in einer Ruheposition des ersten Bremspedals den ersten Steueranschluss mit dem zweiten Schalter elektrisch leitend zu verbinden. Unter einer Ruheposition kann eine Position der Bremspedale bei nicht betätigter Bremsanlage verstanden werden. Diese Ausführungsform ermöglicht es, durch die alleinige Betätigung des ersten Schalters zumindest den zweiten Steueranschluss mit dem Versorgungsanschluss zu koppeln und durch die alleinige Betätigung des zweiten Schalters zumindest den ersten Steueranschluss mit dem Versorgungsanschluss zu koppeln. Somit kann auf zusätzliche Maßnahmen zur Synchronisierung der beiden Schalter verzichtet werden.

Gemäß einer weiteren Ausführungsform kann die Bremsanlage ein Steuergerät zum Steuern einer Spannungsversorgung des Schaltmoduls aufweisen. Insbesondere kann das Steuergerät ausgebildet sein, um die Spannungsversorgung zu unterbrechen, wenn das Fahrzeug eine vorbestimmte Geschwindigkeit überschreitet. Je nach Ausführungsform kann das Steuergerät zusätzlich oder alternativ ausgebildet sein, um die Spannungsversorgung zu unterbrechen, wenn das Fahrzeug einen vorbestimmten Neigungswinkel überschreitet, eine Differenzialsperre des Fahrzeugs aktiviert wird oder ein Anhänger an das Fahrzeug angekoppelt wird. Dadurch kann eine Fahrstabilität des Fahrzeugs bei aktivierter Lenkbremsfunktion erhöht werden.

Unter einem Steuergerät kann ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Schließlich schafft der hier vorgestellte Ansatz ein Verfahren zum Betreiben einer Bremsanlage gemäß einem der vorangegangenen Ansprüche. Das Verfahren umfasst einen Schritt des Ausgebens eines Steuersignals an das zweite Steuerventil durch das Schaltmodul, wenn das erste Bremspedal betätigt wird, um die Bremswirkung der zweiten Bremseinrichtung aufzuheben oder zumindest zu verringern. Zusätzlich oder alternativ kann im Schritt des Ausgebens ein Steuersignal an das erste Steuerventil durch das Schaltmodul ausgegeben werden, wenn das zweite Bremspedal betätigt wird, um die Bremswirkung der ersten Bremseinrichtung aufzuheben oder zumindest zu verringern.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung einer Bremsanlage mit zwei Bremseinrichtungen gemäß einem Ausführungsbeispiel der vorliegenden Erfindung;
- Fig. 2: eine schematische Darstellung einer Bremsanlage mit drei Bremseinrichtungen gemäß einem Ausführungsbeispiel der vorliegenden Erfindung;
- Fig. 3a, 3b: schematische Darstellungen einer Bremsanlage mit Anhängerschnittstelle gemäß verschiedenen Ausführungsbeispielen der vorliegenden Erfindung; und
- Fig. 4: ein Ablaufdiagramm eines Verfahrens zum Betreiben einer Bremsanlage gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

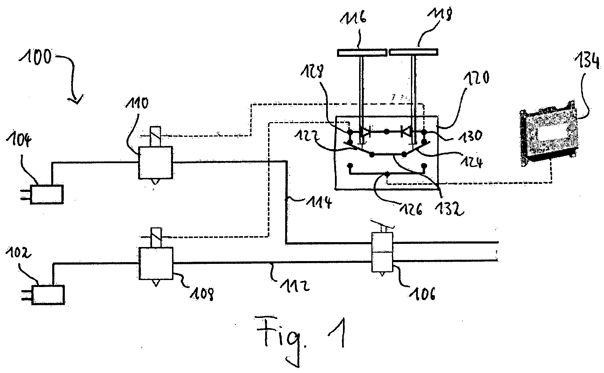

Fig. 1 zeigt eine schematische Darstellung einer Bremsanlage 100 mit zwei Bremseinrichtungen 102, 104 gemäß einem Ausführungsbeispiel der vorliegenden Erfindung. Dabei dient die erste Bremseinrichtung 102 zum Bremsen eines ersten Rads eines Fahrzeugs, hier eines linken Hinterrads, und die zweite Bremseinrichtung 104 zum Bremsen eines zweiten Rads des Fahrzeugs, hier eines rechten Hinterrads. Beispielhaft sind die beiden Bremseinrichtungen 102, 104 gemäß Fig. 1 pneumatisch betätigbar. Alternativ können die Bremseinrichtung 102, 104 jedoch auch hydraulisch oder sowohl hydraulisch als auch pneumatisch betätigbar sein.

Ein Bremssteuerventil 106 ist über ein erstes Steuerventil 108 mit der ersten Bremseinrichtung 102 und über ein zweites Steuerventil 110 mit der zweiten Bremseinrichtung 104 pneumatisch gekoppelt. Dabei sind die erste Bremseinrichtung 102 und das erste Steuerventil 108 über einen ersten Bremskreis 112 mit dem Bremssteuerventil 106 verbunden und die zweite Bremseinrichtung 104 und das zweite Steuerventil 110 über einen zweiten Bremskreis 114 mit dem Bremssteuerventil 106 verbunden. Die Bremsanlage 100 weist somit eine Kreistrennung zwischen linker und rechter Fahrzeuglängsseite auf, hier beispielhaft zwischen linkem und rechtem Hinterrad. Beispielsweise sind die beiden Bremskreise 112, 114 über das Bremssteuerventil 106 miteinander in Reihe geschaltet.

Das Bremssteuerventil 106 ist mit einem dem linken Hinterrad zugeordneten ersten Bremspedal 116 und einem dem rechten Hinterrad zugeordneten zweiten Bremspedal 118 gekoppelt. Die Bremspedale 116, 118 können auch als Betätigungselement des Bremssteuerventils 106 dienen, müssen es aber nicht. Beispielsweise ist auch das Bremssteuerventil 106 ausgebildet, um beide Bremskreise 112, 114 mit einem pneumatischen Bremsdruck zu beaufschlagen, wenn zumindest eines der beiden Bremspedale 116, 118 betätigt wird, sodass beide Bremseinrichtungen 102, 104 mittels des Bremsdrucks aktiviert werden. Dabei kann der Bremsdruck von einem jeweiligen Betätigungsweg der Bremspedale 116, 118 abhängig sein. Denkbar ist alternativ auch, dass die Bremspedale 116 und 118 separat zu einem Fußbremspedal als Bremssteuerventil 106 vorgesehen sind.

Dadurch, dass die beiden Bremskreise 112, 114 mittels des Bremssteuerventils 106 seriell angeordnet sind, werden die Bremseinrichtungen 102, 104 sowohl bei getrennter Betätigung als auch bei gemeinsamer Betätigung der Bremspedale 116, 118 mit dem Bremsdruck beaufschlagt. Um nun zu ermöglichen, dass bei Betätigung des ersten Bremspedals 116 nur die erste Bremseinrichtung 102 aktiviert wird und somit nur das erste Rad, also das linke Hinterrad, eingebremst wird und bei Betätigung des zweiten Bremspedals 118 nur die zweite Bremseinrichtung 104 aktiviert wird und somit nur das zweite Rad, also das rechte Hinterrad, eingebremst wird, sind die Bremspedale 116, 118 mit einem elektromechanischen Schaltmodul 120 zur Ansteuerung der Steuerventile 108, 110 verbunden.

Zur Realisierung einer derartigen Lenkbremsfunktion bei Kreistrennung links/rechts weist das Schaltmodul 120 gemäß diesem Ausführungsbeispiel einen mit dem ersten Bremspedal 116 mechanisch gekoppelten ersten Schalter 122 und einen mit dem zweiten Bremspedal 118 mechanisch gekoppelten zweiten Schalter 124 auf. Des Weiteren umfasst das Schaltmodul 120 einen Versorgungsanschluss 126 zum Anlegen einer Versorgungsspannung, einen mit dem ersten Steuerventil 108 elektrisch leitend verbundenen ersten Steueranschluss 128 sowie einen mit dem zweiten Steuerventil 110 elektrisch leitend verbundenen zweiten Steueranschluss 130. Die beiden Schalter 122, 124 sind über eine Verbindungsleitung 132 miteinander in Reihe geschaltet. Die Spannungsversorgung des Versorgungsanschlusses 126 wird beispielsweise bei Aktivierung der Lenkbremsfunktion eingeschaltet. Das Einschalten kann entweder automatisch, etwa wenn die beiden Bremspedale 116, 118 mechanisch voneinander entkoppelt werden, oder auch manuell durch Betätigung eines der Lenkbremsfunktion zugeordneten Funktionsschalters erfolgen.

In Fig. 1 sind die beiden Bremspedale 116, 118 je in einer Ruheposition gezeigt. Dabei ist der erste Steueranschluss 128 über den ersten Schalter 122 und der zweite Steueranschluss 130 über den zweiten Schalter 124 mit der Verbindungsleitung 132 verbunden. Wird das erste Bremspedal 116 betätigt, so wird der erste Schalter 122 durch das erste Bremspedal 116 in eine Position bewegt, in der die Verbindungsleitung 132 mit dem Versorgungsanschluss 126 elektrisch leitend verbunden ist, wodurch die Versorgungsspannung bei aktivierter Lenkbremsfunktion an dem zweiten Steueranschluss 130 anliegt. Das zweite Steuerventil 110 kann beispielsweise ausgebildet sein, um bei Anliegen der Versorgungsspannung am zweiten Steueranschluss 130 den zweiten Bremskreis 114 derart abzusperren, dass die zweite Bremseinrichtung 104 nicht mehr mit dem Bremsdruck oder zumindest mit einem verringerten Bremsdruck beaufschlagt wird. Auf diese Weise wird erreicht, dass beim Betätigen des ersten Bremspedals 116 lediglich die erste Bremseinrichtung 102 aktiviert wird, d. h. lediglich das linke Hinterrad eingebremst wird. In analoger Weise dient der zweite Schalter 124 dazu, um die Verbindungsleitung 132 beim Betätigen des zweiten Bremspedals 118 mit dem Versorgungsanschluss 126 zu verbinden, sodass die Versorgungsspannung am ersten Steueranschluss 128 anliegt und entsprechend das erste Steuerventil 108 aktiviert wird.

Gemäß dem in Fig. 1 gezeigten Ausführungsbeispiel ist der Versorgungsanschluss 126 mit einem Steuergerät 134 verbunden, das ausgebildet ist, um die Spannungsversorgung des Schaltmoduls 120 zu steuern, wie weiter unten genauer beschrieben.

Die Bremsanlage 100 ist beispielsweise als ein Bremssystem mit einer Kreistrennung links/rechts und einem zweikreisigen Bremssteuerventil 106 zur seriellen Beaufschlagung der beiden Bremskreise 112, 114 mit Druck realisiert.

Das Fahrzeug verfügt über ein linkes Bremspedal 116 und ein rechtes Bremspedal 118, die im normalen Fahrzustand mechanisch miteinander gekoppelt sind. Jedes der Pedale 116, 118 ist mit einem eigenen elektrischen Schalter 122, 124 gekoppelt, die bei Betätigung des ihnen jeweils zugeordneten Pedals geschlossen werden. Wird in diesem Fahrzustand ein einzelnes Pedal betätigt, so wird das Bremssteuerventil 106 aktuiert, wodurch beide Bremskreise 112, 114 mit Druck beaufschlagt werden.

Das Steuergerät 134 kann ausgebildet sein, um die Spannungsversorgung bei Überschreiten einer gewissen Fahrzeuggeschwindigkeit oder bei Deaktivierung der Lenkbremsfunktion durch einen Fahrer zu unterbrechen.

Sollte ungewollt die mechanische Kopplung der beiden Pedale 116, 118 durch den Fahrer oder eine andere Einrichtung nicht erfolgt sein, so werden auch dann beide Bremskreise 112, 114 durch das Bremssteuerventil 106 mit Druck beaufschlagt, wenn nur eines der beiden Pedale 116, 118 betätigt wird.

Ist die Lenkbremsfunktion aktiviert, so wird beispielsweise beim Betätigen des linken Bremspedals 116 der linke elektrische Schalter 122 geschlossen und, abhängig vom Betätigungsweg des Pedals 116, zugleich ein Druck durch das Bremssteuerventil 106 ausgesteuert. Durch das Schließen des linken elektrischen Schalters 122 wird über die logische Schaltung 120, auch Schaltmodul genannt, und über eine elektrische Leitung, die mit der Anordnung für die rechte Hinterradbremse 104 verbunden ist, das zweite Steuerventil 110 aktiviert, das etwa als Drucksteuerventil oder Absperrventil fungiert. Dadurch wird die Bremsleitung des zweiten Bremskreises entlüftet, d. h. die Verbindung der rechten Hinterradbremse 104 zum Bremssteuerventil 106 getrennt.

Gleichzeitig wird abhängig vom Pedalweg des linken Bremspedals 116 ein entsprechender Druck durch das Bremssteuerventil 106 über die Bremsleitung des ersten Bremskreises 112 zur linken Hinterradbremse 102 geleitet und das entsprechende Rad eingebremst.

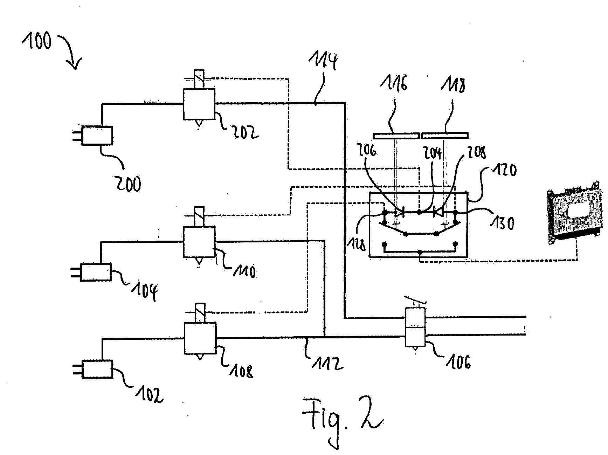

Die beschriebene Anordnung kann analog für Fahrzeuge mit einer Kreistrennung zwischen Vorder- und Hinterradbremse verwendet werden, wie nachfolgend anhand der Figuren 2 bis 3b gezeigt.

Fig. 2 zeigt eine schematische Darstellung einer Bremsanlage 100 mit drei Bremseinrichtungen 102, 104, 200 gemäß einem Ausführungsbeispiel der vorliegenden Erfindung. Die in Fig. 2 gezeigte Bremsanlage 100 entspricht im Wesentlichen der anhand von Fig. 1 beschriebenen Bremsanlage. Im Unterschied zu Fig. 1 weist die Bremsanlage 100 eine weitere Bremseinrichtung 200 auf, hier beispielhaft eine Vorderradbremse, die über den zweiten Bremskreis 114 mit dem Bremssteuerventil 106 verbunden ist. Dabei sind die erste Bremseinrichtung 102 und die zweite Bremseinrichtung 104 je über den ersten Bremskreis 112 mit dem Bremssteuerventil 106 verbunden. Die Bremsanlage 100 weist somit eine Kreistrennung zwischen vorn und hinten auf.

Zwischen der weiteren Bremseinrichtung 200 und dem Bremssteuerventil 106 ist ein weiteres Steuerventil 202 angeordnet, das analog zu den beiden Steuerventilen 108, 110 ausgebildet ist, um im aktivierten Zustand den zweiten Bremskreis 114 zu entlüften. Dazu ist das weitere Steuerventil 202 elektrisch leitend mit einem weiteren Steueranschluss 204 des Schaltmoduls 120 verbunden. Gemäß diesem Ausführungsbeispiel ist der weitere Steueranschluss 204 zwischen dem ersten Steueranschluss 128 und dem zweiten Steueranschluss 130 angeordnet. Um zu verhindern, dass die Versorgungsspannung gleichzeitig am ersten Steueranschluss 128 und am zweiten Steueranschluss 130 anliegt, ist der erste Steueranschluss 128 durch eine erste Diode 206 und der zweite Steueranschluss 130 durch eine zweite Diode 208 vom weiteren Steueranschluss 204 getrennt, wobei die beiden Dioden 206, 208 unterschiedlich gepolt sind. Durch eine derartige Anordnung wird erreicht, dass das weitere Steuerventil 202 zusätzlich zum zweiten Steuerventil 110 aktiviert wird, wenn das erste Bremspedal 116 betätigt wird, bzw. zusätzlich zum ersten Steuerventil 108 aktiviert wird, wenn das zweite Bremspedal 118 betätigt wird.

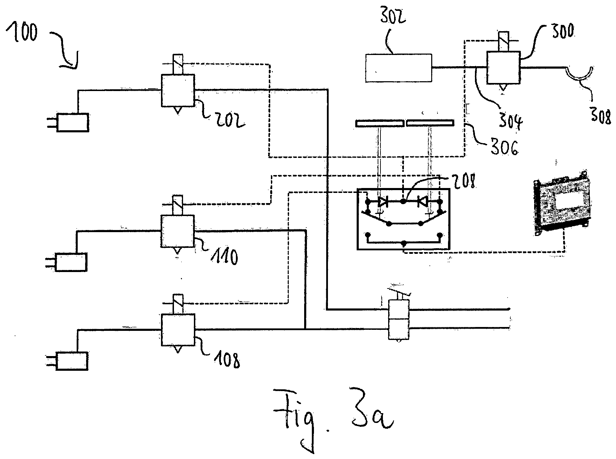

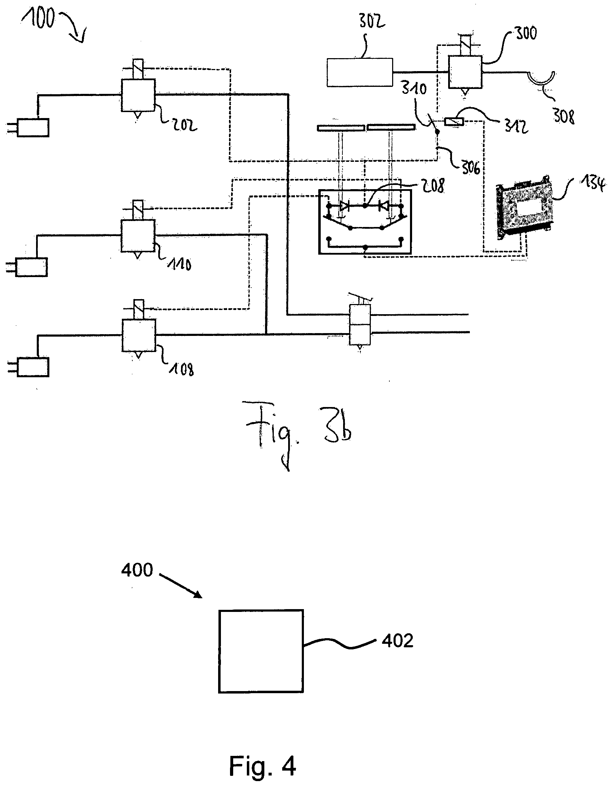

Die Figuren 3a und 3b zeigen schematische Darstellungen einer Bremsanlage 100 mit Anhängerschnittstelle gemäß verschiedenen Ausführungsbeispielen der vorliegenden Erfindung. Bei der Bremsanlage 100 handelt es sich beispielsweise um eine Bremsanlage, wie sie vorangehend anhand von Fig. 2 beschrieben ist, mit dem Unterschied, dass der weitere Steueranschluss 204 zusätzlich mit einem Anhängersteuerventil 300 zum Steuern einer Anhängerbremseinrichtung 302 verbunden ist, die dazu dient, einen an das Fahrzeug gekoppelten Anhänger zu bremsen. Das Anhängersteuerventil 300 ist analog zu den vorangehend beschriebenen Steuerventilen 108, 110, 202 ausgebildet, um bei Anliegen der Versorgungsspannung am weiteren Steueranschluss 208 einen Anhängerbremskreis 304 zu entlüften und so die Anhängerbremseinrichtung 302 zu deaktivieren oder eine durch die Anhängerbremseinrichtung 302 auf den Anhänger ausgeübte Bremskraft zumindest zu reduzieren.

Gemäß einem Ausführungsbeispiel ist ein zusätzliches Steuer- oder Absperrventil als Anhängersteuerventil 300 über einen weiteren elektrischen Kreis 306 analog bzw. parallel zum elektrischen Kreis zur Vorderachse betätigbar. Das Anhängersteuerventil 300 verhindert somit eine Betätigung der Anhängerbremseinrichtung 302, etwa einer Betriebsbremse des Anhängers. Dies kann beispielsweise durch Absperren eines Steuerdrucks oder von Steuerdrücken zu einem Bremsventil der Anhängerbremseinrichtung oder direkt durch Absperren eines Steuersignals zum Anhänger über das Anhängersteuerventil 300 erfolgen, beispielsweise zu einem gelben Kupplungskopf 308. Durch diese Anordnung kann unter anderem ein Einbremsen des Anhängers bei aktiver Lenkbremse vermieden werden.

Fig. 3a zeigt eine Lenkbremsfunktion ohne Einbremsen des Anhängers. Die Bremsanlage 100 kann jedoch auch mit einer schaltbaren Anhängerschnittstelle ausgeführt sein, wie in Fig. 3b gezeigt. Dazu umfasst der elektrische Kreis 306 einen Anhängerschalter 310, der beispielsweise durch ein elektrisches Relais 312 schaltbar ist. Gemäß diesem Ausführungsbeispiel ist das Relais 312 durch das Steuergerät 134 ansteuerbar. Das Steuergerät 134 kann ausgebildet sein, um den elektrischen Kreis 306 mittels des Relais 312 trotz aktiver Lenkbremse zu öffnen und so ein Absperren des Steuerdrucks zum Anhänger zu unterbinden, wodurch der Anhänger gebremst wird. Beispielsweise kann das Steuergerät 134 ausgebildet sein, um den Anhängerschalter 310 ansprechend auf das Überschreiten einer vordefinierten Fahrzeuggeschwindigkeit zu öffnen. Dadurch wird erreicht, dass der Anhänger bei Überschreiten der vordefinierten Fahrzeuggeschwindigkeit grundsätzlich gebremst wird.

Fig. 4 zeigt ein Ablaufdiagramm eines Verfahrens 400 zum Betreiben einer Bremsanlage gemäß einem Ausführungsbeispiel der vorliegenden Erfindung, etwa einer Bremsanlage, wie sie vorangehend anhand der Figuren 1 bis 3b beschrieben ist. Das Verfahren 400 umfasst einen Schritt 402, in dem ein Steuersignal an das zwischen der zweiten Bremseinrichtung und dem Bremssteuerventil angeordnete zweite Steuerventil ausgegeben wird, wenn das erste Bremspedal betätigt wird. Das Steuersignal wird beispielsweise durch Betätigen eines mit dem ersten Bremspedal mechanisch gekoppelten Schalters des Schaltmoduls erzeugt. Das zweite Steuerventil ist ausgebildet, um unter Verwendung des Steuersignals eine die zweite Bremseinrichtung mit dem Bremssteuerventil verbindende Bremsleitung derart abzusperren bzw. zu entlüften, dass eine Bremswirkung der zweiten Bremseinrichtung aufgehoben oder zumindest verringert wird.

Je nach Ausführungsform wird im Schritt 402 zusätzlich oder alternativ ein Steuersignal an das zwischen der ersten Bremseinrichtung und dem Bremssteuerventil angeordnete erste Steuerventil ausgegeben, wenn das zweite Bremspedal betätigt wird. Auch in diesem Fall kann das Steuersignal durch Betätigen eines mit dem zweiten Bremspedal mechanischen gekoppelten Schalters des Schaltmoduls erzeugt werden. Analog zum zweiten Steuerventil ist das erste Steuerventil ausgebildet, um unter Verwendung des Steuersignals eine die erste Bremseinrichtung mit dem Bremssteuerventil verbindende Bremsleitung derart abzusperren bzw. entlüften, dass eine Bremswirkung der ersten Bremseinrichtung aufgehoben oder zumindest verringert wird.

Gemäß einem Ausführungsbeispiel dient das Verfahren 400 zur Realisierung einer Lenkbremsfunktion für ein Fahrzeug, insbesondere für ein landwirtschaftliches Fahrzeug. Das Fahrzeug kann eine beliebige Art von Bremssystem, ein ein- oder zweikreisiges Bremssteuerventil mit beliebigem Medium und zwei Fußbremspedale zur Betätigung der Betriebsbremse aufweisen. Die Lenkbremssteuerung wird durch zwei elektrische Pedalschalter in Kombination mit einer einfachen elektrischen Schaltung realisiert, wobei die Schalter je nach Ausführungsform dazu dienen, mehrere Drucksteuer-, Wege- oder Absperrventile zu aktuieren.

Optional umfasst die elektrische Schaltung zusätzlich ein oder mehrere Drucksteuer-, Wege- oder Absperrventile, um ein Einbremsen eines Anhängers bei aktiver Lenkbremse zu verhindern. Beispielsweise kann der elektrische Kreis, der zur Schaltung der genannten Ventile dient, mit einem zusätzlichen elektrischen Relais geschaltet werden, um das Einbremsen des Anhängers bei aktiver Lenkbremse zu verhindern. Dazu kann das elektrische Relais durch ein beliebiges Steuergerät betätigt oder gesteuert werden.

Gemäß einem weiteren Ausführungsbeispiel kann die Lenkbremsfunktion durch Abschaltung einer Spannungsversorgung mittels eines elektrischen Schalters und, zusätzlich oder alternativ, eines externen Steuergeräts deaktiviert werden.

Ferner ist denkbar, dass die Lenkbremsfunktion bei Aktivierung einer Differenzialsperre an der Hinter- oder Vorderachse deaktiviert wird oder dass die Lenkbremsfunktion nach einem Neustart des Fahrzeugs oder beim Einschalten der Zündung durch den Fahrer erneut aktiviert werden muss.

Je nach Ausführungsform kann die Lenkbremsfunktion beim Überschreiten einer vordefinierten Fahrzeuggeschwindigkeit, beim Überschreiten einer vordefinierten Fahrzeugneigung in Längs- oder Querrichtung oder bei Erkennung eines gekoppelten Anhängers deaktiviert werden. Zusätzlich oder alternativ kann die Lenkbremsfunktion durch die Betätigung eines Schalters durch den Fahrer deaktiviert werden.

Die beschriebenen Ausführungsbeispiele sind nur beispielhaft gewählt und können miteinander kombiniert werden.

### Bezugszeichenliste

- 100: Bremsanlage
- 102: erste Bremseinrichtung
- 104: zweite Bremseinrichtung
- 106: Bremssteuerventil
- 108: erstes Steuerventil
- 110: zweites Steuerventil
- 112: erster Bremskreis
- 114: zweiter Bremskreis
- 116: erstes Bremspedal
- 118: zweites Bremspedal
- 120: elektromechanisches Schaltmodul
- 122: erster Schalter
- 124: zweiter Schalter
- 126: Versorgungsanschluss
- 128: erster Steueranschluss
- 130: zweiter Steueranschluss
- 132: Verbindungsleitung
- 134: Steuergerät
- 200: weitere Bremseinrichtung
- 202: weiteres Steuerventil
- 204: weiterer Steueranschluss
- 206: erste Diode
- 208: zweite Diode
- 300: Anhängersteuerventil
- 302: Anhängerbremseinrichtung
- 304: Anhängerbremskreis
- 306: elektrischer Kreis
- 308: Kupplungskopf
- 310: Anhängerschalter
- 312: Relais
- 400: Verfahren zum Betreiben einer Bremsanlage
- 402: Ausgeben eines Steuersignals durch das Schaltmodul

## Patentansprüche

1. Bremsanlage (100) für ein Kraftfahrzeug, wobei die Bremsanlage (100) folgende Merkmale aufweist:
eine pneumatisch und/oder hydraulisch betätigbare erste Bremseinrichtung (102) zum Bremsen eines ersten Rads des Kraftfahrzeugs;
eine pneumatisch und/oder hydraulisch betätigbare zweite Bremseinrichtung (104) zum Bremsen eines zweiten Rads des Kraftfahrzeugs;
ein dem ersten Rad zugeordnetes erstes Bremspedal (116);
ein dem zweiten Rad zugeordnetes zweites Bremspedal (118);
**dadurch gekennzeichnet, dass** ein Bremssteuerventil (106), das ausgebildet ist, um die erste Bremseinrichtung (102) und/oder die zweite Bremseinrichtung (104) beim Betätigen des ersten Bremspedals (116) und/oder des zweiten Bremspedals (118) mit einem pneumatischen und/oder hydraulischen Bremsdruck zu beaufschlagen;
ein erstes Steuerventil (108) zum Steuern eines Bremsdrucks in der ersten Bremseinrichtung (102);
ein zweites Steuerventil (110) zum Steuern eines Bremsdrucks in der zweiten Bremseinrichtung (104); und
ein durch das erste Bremspedal (116) und/oder das zweite Bremspedal (118) betätigbares elektromechanisches Schaltmodul (120), das ausgebildet ist, um beim Betätigen des ersten Bremspedals (116) das zweite Steuerventil (110) zu aktivieren, um eine Bremswirkung der zweiten Bremseinrichtung (104) aufzuheben oder zumindest zu verringern, und/oder beim Betätigen des zweiten Bremspedals (118) das erste Steuerventil (108) aktivieren, um eine Bremswirkung der ersten Bremseinrichtung (102) aufzuheben oder zumindest zu verringern.

2. Bremsanlage (100) gemäß Anspruch 1, **gekennzeichnet durch** zumindest einen ersten Bremskreis (112) und einen zweiten Bremskreis (114), wobei das Bremssteuerventil (106) ausgebildet ist, um die erste Bremseinrichtung (102) über den ersten Bremskreis (112) und/oder den zweiten Bremskreis (114) und die zweite Bremseinrichtung (104) über den ersten Bremskreis (112) und/oder den zweiten Bremskreis (114) mit dem Bremsdruck zu beaufschlagen, insbesondere wobei der erste Bremskreis (112) und der zweite Bremskreis (114) in Reihe geschaltet sind.

3. Bremsanlage (100) gemäß einem der vorangegangenen Ansprüche, **gekennzeichnet durch** zumindest eine pneumatisch und/oder hydraulisch betätigbare weitere Bremseinrichtung (200) zum Bremsen zumindest eines weiteren Rads des Kraftfahrzeugs und zumindest ein weiteres Steuerventil (202) zum Steuern eines Bremsdrucks in der weiteren Bremseinrichtung (200), wobei das Bremssteuerventil (106) ausgebildet ist, um ferner die weitere Bremseinrichtung (200) beim Betätigen des ersten Bremspedals (116) und/oder des zweiten Bremspedals (118) mit dem Bremsdruck zu beaufschlagen, wobei das Schaltmodul (120) ausgebildet ist, um beim Betätigen des ersten Bremspedals (116) und/oder des zweiten Bremspedals (118) ferner das weitere Steuerventil (202) zu aktivieren, um eine Bremswirkung der weiteren Bremseinrichtung (200) aufzuheben oder zumindest zu verringern.

4. Bremsanlage (100) gemäß Anspruch 2 und 3, **dadurch gekennzeichnet, dass** das Bremssteuerventil (106) ausgebildet ist, um die erste Bremseinrichtung (102) und/oder die zweite Bremseinrichtung (104) über den ersten Bremskreis (112) und die weitere Bremseinrichtung (200) über den zweiten Bremskreis (114) mit dem Bremsdruck zu beaufschlagen.

5. Bremsanlage (100) gemäß einem der vorangegangenen Ansprüche, **dadurch gekennzeichnet, dass** das Schaltmodul (120) einen mit dem ersten Steuerventil (108) elektrisch leitend verbundenen ersten Steueranschluss (128), einen mit dem zweiten Steuerventil (110) elektrisch leitend verbundenen zweiten Steueranschluss (130), einen Versorgungsanschluss (126) zum Anlegen einer Versorgungsspannung, einen mit dem ersten Bremspedal (116) mechanisch gekoppelten ersten Schalter (122) und einen mit dem zweiten Bremspedal (118) mechanisch gekoppelten zweiten Schalter (124) aufweist, wobei der erste Schalter (122) ausgebildet ist, um beim Betätigen des ersten Bremspedals (116) den zweiten Steueranschluss (130) mit dem Versorgungsanschluss (126) elektrisch leitend zu verbinden, um das zweite Steuerventil (110) zu aktivieren, und der zweite Schalter (124) ausgebildet ist, um beim Betätigen des zweiten Bremspedals (118) den ersten Steueranschluss (128) mit dem Versorgungsanschluss (126) elektrisch leitend zu verbinden, um das erste Steuerventil (108) zu aktivieren.

6. Bremsanlage (100) gemäß Anspruch 3 und 5, **dadurch gekennzeichnet, dass** das Schaltmodul (120) zumindest einen weiteren Steueranschluss (204) aufweist, der mit dem weiteren Steuerventil (202) und/oder einem Anhängersteuerventil (300) zum Steuern eines Bremsdrucks in einer pneumatisch und/oder hydraulisch betätigbaren Anhängerbremseinrichtung (302) zum Bremsen eines Anhängers des Kraftfahrzeugs elektrisch leitend verbunden ist, wobei der erste Schalter (122) ausgebildet ist, um den weiteren Steueranschluss (204) beim Betätigen des ersten Bremspedals (116) mit dem Versorgungsanschluss (126) elektrisch leitend zu verbinden, und der zweite Schalter (124) ausgebildet ist, um den weiteren Steueranschluss (204) beim Betätigen des zweiten Bremspedals (118) mit dem Versorgungsanschluss (126) elektrisch leitend zu verbinden, um das weitere Steuerventil (202) und/oder das Anhängersteuerventil (300) zu aktivieren, um eine Bremswirkung der Anhängerbremseinrichtung (302) aufzuheben oder zumindest zu verringern.

7. Bremsanlage (100) gemäß Anspruch 6, **gekennzeichnet durch** zumindest einen zwischen dem weiteren Steueranschluss (204) und dem Anhängersteuerventil (300) angeordneten Anhängerschalter (310) zum Steuern einer Spannungsversorgung des Anhängersteuerventils (300).

8. Bremsanlage (100) gemäß Anspruch 6 oder 7, **dadurch gekennzeichnet, dass** zwischen dem ersten Steueranschluss (128) und dem weiteren Steueranschluss (204) eine erste Diode (206) mit Durchlassrichtung vom ersten Steueranschluss (128) zum weiteren Steueranschluss (204) und zwischen dem zweiten Steueranschluss (130) und dem weiteren Steueranschluss (204) eine zweite Diode (208) mit Durchlassrichtung vom zweiten Steueranschluss (130) zum weiteren Steueranschluss (204) angeordnet ist.

9. Bremsanlage (100) gemäß einem der Ansprüche 5 bis 8, **dadurch gekennzeichnet, dass** der erste Schalter (122) und der zweite Schalter (124) in Reihe geschaltet sind, wobei der zweite Schalter (124) ausgebildet ist, um in einer Ruheposition des zweiten Bremspedals (118) den zweiten Steueranschluss (130) mit dem ersten Schalter (122) elektrisch leitend zu verbinden, und der erste Schalter (122) ausgebildet ist, um in einer Ruheposition des ersten Bremspedals (116) den ersten Steueranschluss (128) mit dem zweiten Schalter (124) elektrisch leitend zu verbinden.

10. Bremsanlage (100) gemäß einem der vorangegangenen Ansprüche, **gekennzeichnet durch** ein Steuergerät (134) zum Steuern einer Spannungsversorgung des Schaltmoduls (120), insbesondere wobei das Steuergerät (134) ausgebildet ist, um die Spannungsversorgung zu unterbrechen, wenn das Kraftfahrzeug eine vorbestimmte Geschwindigkeit und/oder einen vorbestimmten Neigungswinkel überschreitet und/oder eine Differenzialsperre des Kraftfahrzeugs aktiviert wird und/oder ein Anhänger an das Kraftfahrzeug angekoppelt wird.

11. Verfahren (400) zum Betreiben einer Bremsanlage (100) gemäß einem der vorangegangenen Ansprüche, wobei das Verfahren (400) folgenden Schritt umfasst:
Ausgeben (402) eines Steuersignals an das zweite Steuerventil (110) durch das Schaltmodul (120), wenn das erste Bremspedal (116) betätigt wird, um die Bremswirkung der zweiten Bremseinrichtung (104) aufzuheben oder zumindest zu verringern, und/oder Ausgeben (402) eines Steuersignals an das erste Steuerventil (108) durch das Schaltmodul (120), wenn das zweite Bremspedal (118) betätigt wird, um die Bremswirkung der ersten Bremseinrichtung (102) aufzuheben oder zumindest zu verringern.

## Claims

1. A brake system (100) for a vehicle, the brake system (100) comprising the following features:
a pneumatically and/or hydraulically actuatable first brake device (102) for braking a first wheel of the vehicle;
a pneumatically and/or hydraulically actuatable second brake device (104) for braking a second wheel of the vehicle;
a first brake pedal (116) associated with the first wheel;
a second brake pedal (118) associated with the second wheel;
**characterised by**
a brake control valve (106) that is designed to apply a pneumatic and/or hydraulic brake pressure to the first brake device (102) and/or to the second brake device (104) when the first brake pedal (116) and/or the second brake pedal (118) is actuated;
a first control valve (108) for controlling the brake pressure in the first brake device (102);
a second control valve (110) for controlling the brake pressure in the second brake device (104); and
an electromechanical switch module (120) that can be actuated by the first brake pedal (116) and/or by the second brake pedal (118) and that is designed to activate the second control valve (110) when the first brake pedal (116) is actuated in order to override or at least reduce a braking effect of the second brake device (104) and/or to activate the first control valve (108) when the second brake pedal (118) is actuated in order to override or at least reduce a braking effect of the first brake device (102).

2. A brake system (100) according to claim 1, **characterised by** at least one first brake circuit (112) and one second brake circuit (114), the brake control valve (106) being designed to apply the brake pressure to the first brake device (102) via the first brake circuit (112) and/or the second brake circuit (114) and to the second brake device (104) via the first brake circuit (112) and/or the second brake circuit (114), in particular the first brake circuit (112) and the second brake circuit (114) being connected in series.

3. A brake system (100) according to any one of the preceding claims, **characterised by** at least one further pneumatically and/or hydraulically actuatable brake device (200) for braking at least one further wheel of the vehicle and by at least one further control valve (202) for controlling a brake pressure in the further brake device (200), the brake control valve (106) being further designed to apply the brake pressure to the further brake device (200) when the first brake pedal (116) and/or the second brake pedal (118) is/are actuated, the switch module (120) being further designed to activate the further control valve (202) when the first brake pedal (116) and/or the second brake pedal (118) is/are actuated in order to override or at least reduce a braking effect of the further brake device (200).

4. A brake system (100) according to claims 2 and 3, **characterised in that** the brake control valve (106) is designed to apply the brake pressure to the first brake device (102) and/or to the second brake device (104) via the first brake circuit (112) and to apply the brake pressure to the further brake device (200) via the second brake circuit (114).

5. A brake system (100) according to any one of the preceding claims, **characterised in that** the switch module (120) comprises a first control port (128) that is electrically conductively connected to the first control valve (108), a second control port (130) that is electrically conductively connected to the second control valve (110), a supply port (126) for applying a supply voltage, a first switch (122) that is mechanically coupled to the first brake pedal (116) and a second switch (124) that is mechanically coupled to the second brake pedal (118), the first switch (122) being designed to electrically conductively connect the second control port (130) to the supply port (126) when the first brake pedal (116) is actuated in order to activate the second control valve (110) and the second switch (124) being designed to electrically conductively connect the first control port (128) to the supply port (126) when the second brake pedal (118) is actuated in order to activate the first control valve (108).

6. A brake system (100) according to claims 3 and 5, **characterised in that** the switch module (120) comprises at least one further control port (204) that is electrically conductively connected to the further control valve (202) and/or to a trailer control valve (300) for controlling a brake pressure in a pneumatically and/or hydraulically actuatable trailer brake device (302) for braking a trailer of the vehicle, the first switch (122) being designed to electrically conductively connect the further control port (204) to the supply port (126) when the first brake pedal (116) is actuated, and the second switch (124) being designed to electrically conductively connect the further control port (204) to the supply port (126) when the second brake pedal (118) is actuated in order to activate the further control valve (202) and/or the trailer control valve (300) in order to override or at least reduce a braking effect of the trailer brake device (302).

7. A brake system (100) according to claim 6, **characterised by** at least one trailer switch (310) arranged between the further control port (204) and the trailer control valve (300) for controlling a voltage supply of the trailer control valve (300).

8. A brake system (100) according to claim 6 or 7, **characterised in that** a first diode (206) with a conducting direction from the first control port (128) to the further control port (204) is arranged between the first control port (128) and the further control port (204) and that a second diode (208) with a conducting direction from the second control port (130) to the further control port (204) is arranged between the second control port (130) and the further control port (204).

9. A brake system (100) according to any one of claims 5 to 8, **characterised in that** the first switch (122) and the second switch (124) are connected in series, the second switch (124) being designed to electrically conductively connect the second control port (130) to the first switch (122) when the second brake pedal (118) is in a rest position, and the first switch (122) being designed to electrically conductively connect the first control port (128) to the second switch (124) when the first brake pedal (116) is in a rest position.

10. A brake system (100) according to any one of the preceding claims, **characterised by** a control unit (134) for controlling a voltage supply of the switch module (120), in particular the control unit (134) being designed to interrupt the voltage supply if the vehicle exceeds a predetermined speed and/or a predetermined tilt angle and/or if a differential lock of the vehicle is activated and/or a trailer is coupled to the vehicle.

11. A method (400) for operating a brake system (100) according to any one of the preceding claims, the method (400) comprising the following step:
the emission (402) of a control signal to the second control valve (110) via the switch module (120) when the first brake pedal (116) is actuated in order to override or at least reduce the braking effect of the second brake device (104) and/or the emission (402) of a control signal to the first control valve (108) via the switch module (120) when the second brake pedal (118) is actuated in order to override or at least reduce the braking effect of the first brake device (102).

## Revendications

1. Système (100) de freinage d'un véhicule automobile, le système (100) de freinage ayant les caractéristiques suivantes :
un premier dispositif (102) de freinage, pouvant être actionné pneumatiquement et/ou hydrauliquement, pour freiner une première roue du véhicule automobile;
un deuxième dispositif (104) de freinage, pouvant être actionné pneumatiquement et/ou hydrauliquement pour freiner une deuxième roue du véhicule automobile;
une première pédale (116) de frein, affectée à la première roue;
une deuxième pédale (118) de frein affectée à la deuxième roue,
**caractérisé en ce que**
une soupape (106) de commande de frein est constituée de manière à alimenter, en une pression de freinage pneumatique et/ou hydraulique, le premier dispositif (102) de freinage et/ou le deuxième dispositif (104) de freinage, lorsque la première pédale (116) de frein et/ou la deuxième pédale (118) de frein est actionnée;
une première soupape (108) de commande pour commander une pression de freinage dans le premier dispositif (102) de freinage;
une deuxième soupape (110) de commande pour commander une pression de freinage dans le deuxième dispositif (104) de freinage et
un module (120) de commutation électromécanique, pouvant être actionné par la première pédale (116) de frein et/ou par la deuxième pédale (118) de frein, qui est constitué de manière à activer, lors de l'actionnement de la première pédale (116) de frein, la deuxième soupape (110) de commande pour supprimer ou au moins diminuer un effet de freinage du deuxième dispositif (104) de freinage et/ou pour activer, lorsque la deuxième pédale (118) de frein est actionnée, la première soupape (108) de commande, afin de supprimer ou au moins de diminuer un effet de freinage du premier dispositif (102) de freinage.

2. Système (100) de freinage suivant la revendication 1, **caractérisé par** au moins un premier circuit (102) de frein et un deuxième circuit (114) de frein, la soupape (106) de commande de frein étant constituée pour alimenter, en la pression de freinage, le premier dispositif (102) de freinage, par l'intermédiaire du premier circuit (112) de frein et/ou du deuxième circuit (114) de frein, et le deuxième dispositif (104) de freinage, par l'intermédiaire du premier circuit (112) de frein et/ou du deuxième circuit (114) de frein, dans lequel, notamment, le premier circuit (112) de frein et le deuxième circuit (114) de frein sont montés en série.

3. Système (100) de freinage suivant l'une des revendications précédentes, **caractérisé par** au moins un autre dispositif (200) de freinage, pouvant être actionné pneumatiquement et/ou hydrauliquement pour freiner au moins une autre roue du véhicule automobile, et au moins une autre soupape (202) de commande pour commander une pression de freinage dans l'autre dispositif (200) de freinage, la soupape (106) de commande de frein étant constituée pour alimenter, en la pression de freinage, en outre, l'autre dispositif (200) de freinage, lorsque la première pédale de frein est actionnée et/ou lorsque la deuxième pédale (118) de frein est actionnée, le module (120) de commutation étant constitué pour, lorsque la première pédale (116) de frein est actionnée et/ou lorsque la deuxième pédale (118) de frein est actionnée, activer, en outre, l'autre soupape (202) de commande, afin de supprimer ou au moins de diminuer un effet de freinage de l'autre dispositif (200) de freinage.

4. Système (100) de freinage suivant la revendication 2 et 3, **caractérisé en ce que** la soupape (106) de commande de frein est constituée pour alimenter, en la pression de freinage, le premier dispositif (102) de freinage et/ou le deuxième dispositif (104) de freinage, par l'intermédiaire du premier circuit (112) de frein et l'autre dispositif (200) de freinage par l'intermédiaire du deuxième circuit (114) de frein.

5. Système (100) de freinage suivant l'une des revendications précédentes, **caractérisé en ce que** le module (120) de commutation a une première borne (128) de commande, reliée d'une manière conductrice de l'électricité à la première soupape (108) de commande, une deuxième borne (130) de commande, reliée d'une manière conductrice de l'électricité à la deuxième soupape (110) de commande, une borne (126) d'alimentation pour appliquer une tension d'alimentation, un premier interrupteur (122), couplé mécaniquement à la première pédale (116) de frein, et un deuxième interrupteur (124), couplé mécaniquement à la deuxième pédale (118) de frein, le premier interrupteur (122) étant constitué pour, lorsque la première pédale (116) de frein est actionnée, relier d'une manière conductrice de l'électricité la deuxième borne (130) de commande à la borne (126) d'alimentation, afin d'activer la deuxième soupape (110) de commande, et le deuxième interrupteur (124) est constitué pour, lorsque la deuxième pédale (118) de frein est actionnée, relier d'une manière conductrice de l'électricité la première borne (128) de commande à la borne (126) d'alimentation, afin d'activer la première soupape de commande.

6. Système (100) de freinage suivant la revendication 3 et 5, **caractérisé en ce que** le module (120) de commutation a au moins une autre borne (204) de commande, qui est reliée d'une manière conductrice de l'électricité à l'autre soupape (202) de commande et/ou à une soupape (300) de commande de remorque, pour commander une pression de freinage dans un dispositif (302) de frein de remorque, pouvant être actionné pneumatiquement et/ou hydrauliquement, pour freiner une remorque du véhicule automobile, le premier interrupteur (122) étant constitué pour relier d'une manière conductrice de l'électricité l'autre borne (204) de commande, lorsque la première pédale (116) de frein est actionnée, à la borne (126) d'alimentation, et le deuxième interrupteur (124) est constitué pour relier d'une manière conductrice de l'électricité l'autre borne (204) de commande, lorsque la deuxième pédale (118) de frein est actionnée, à la borne (126) d'alimentation, afin d'activer l'autre soupape (202) de commande et/ou la soupape (300) de commande de remorque, afin de supprimer ou au moins de diminuer l'effet de freinage du dispositif (302) de frein de remorque.

7. Système (100) de freinage suivant la revendication 6, **caractérisé par** au moins un interrupteur (310) de remorque, monté entre l'autre borne (204) de commande et la soupape (300) de commande de remorque, afin de commander une alimentation en tension de la soupape (300) de commande de remorque.

8. Système (100) de freinage suivant la revendication 6 ou 7, **caractérisé en ce qu'**entre la première borne (128) de commande et l'autre borne (204) de commande, est montée une première diode (206) à sens passant allant de la première borne (128) de commande à l'autre borne (204) de commande et, entre la deuxième borne (130) de commande et l'autre borne (204) de commande, une deuxième diode (208) à sens passant allant de la deuxième borne (130) de commande à l'autre borne (204) de commande.

9. Système (100) de freinage suivant l'une des revendications 5 à 8, **caractérisé en ce que** le premier interrupteur (122) et le deuxième interrupteur (124) sont montés en série, le deuxième interrupteur (124) étant constitué pour relier d'une manière conductrice de l'électricité, lorsque la deuxième pédale (118) de frein est dans une position de repos, la deuxième borne (130) de commande au premier interrupteur (122) et le premier interrupteur (122) est constitué pour relier d'une manière conductrice de l'électricité, lorsque la première pédale (116) de frein est dans une position de repos, la première borne (128) de commande au deuxième interrupteur (124) .

10. Système (100) de freinage suivant l'une des revendications précédentes, **caractérisé par** un appareil (134) de commande pour commander une alimentation en tension du module (120) de commutation, notamment dans lequel l'appareil (134) de commande est constitué pour interrompre l'alimentation en tension, si le véhicule automobile dépasse une vitesse déterminée à l'avance et/ou un angle d'inclinaison déterminé à l'avance et/ou activer un blocage de différentiel du véhicule automobile et/ou atteler une remorque au véhicule automobile.

11. Procédé (400) pour faire fonctionner un système (100) de freinage suivant l'une des revendications précédentes, le procédé (400) comprenant le stade suivant :
envoi (402) d'un signal de commande à la deuxième soupape (110) de commande par le module (120) de commutation, si la première pédale (116) de frein est actionnée, afin de supprimer ou au moins de diminuer l'effet de freinage du deuxième dispositif (104) de freinage et/ou envoi (402) d'un signal de commande à la première soupape (108) de commande par le module (120) de commutation, si la deuxième pédale (118) de frein est actionnée, afin de supprimer ou au moins de diminuer l'effet de freinage du premier dispositif (102) de freinage.
